# EUROPEAN PATENT SPECIFICATION

(11) **EP 2 456 588 B1**
(45) Date of publication and mention of the grant of the patent: **12.03.2014**
(21) Application number: 10759971.4
(22) Date of filing: 21.07.2010
(51) Int. Cl.: B23F 5/22, B23Q 1/28

(54) **MACHINE FOR MAKING GEARS**
MASCHINE ZUR HERSTELLUNG VON ANTRIEBSRITZELN
MACHINE POUR LA FABRICATION D'ENGRENAGES

(30) Priority: 23.07.2009 IT BO20090479
(43) Date of publication of application: 30.05.2012
(73) Proprietor: Samp S.p.a. Con Unico Socio, Bentivoglio (IT)
(72) Inventor: AFFATICATI, Artemio, I-21052 Busto Arsizio (IT); FRANCESCHET, Marco, I-40014 Crevalcore Bologna (IT); MANARA, Mauro, I-44011 Argenta (IT); PERRONE, Vito, I-26013 Crema (IT)
(74) Representative: Bergadano, Mirko
(86) International application number: PCT/IB2010/001764
(87) International publication number: WO 2011/010210

(56) References cited:
- FR-A- 516 927
- GB-A- 1 030 532

## Description

### TECHNICAL FIELD

The present invention relates to a machine for making gears.

### BACKGROUND ART

In the gear manufacturing sector, a known method of making gears consists of machining a set of teeth on a corresponding piece and subsequently grinding the toothed piece. Each gear cutting and grinding process comprises a respective rough machining phase and a finishing phase of the piece.

Generally, the gear cutting process is performed by a gear cutting machine that comprises a piece-holder table mounted so as to rotate about its own longitudinal axis and an operating head, which is provided with at least one tool for machining the piece, and is movable along a guiding device extending in a direction substantially transversal to the longitudinal axis of the piece-holder table.

Since the high level of stress transmitted to the operating head and, thus, to said guiding mechanism during the gear cutting process may affect the correct orientation and correct shape of said guiding mechanism, the prior art gear cutting machines of the type described above, although extremely well tried and tested, are unable to perform the subsequent grinding phase which, unlike the initial gear cutting process, requires high precision and tolerances.

Consequently, once the gear cutting process is complete, the piece must be transferred to a grinder that is structurally similar to the gear cutting machine, which therefore makes the gear production process relatively complex and expensive.

A machine according to the preamble of claim 1 is disclosed in document FR 516927.

### DISCLOSURE OF INVENTION

The purpose of the present invention is to provide a machine for making gears that has none of the disadvantages described above and is simple and economic to produce.

According to the present invention, there is provided a machine for making gears, as disclosed in the appended claims.

### BRIEF DESCRIPTION OF THE DRAWINGS

The present invention will now be described with reference to the accompanying drawings, illustrating a non-limiting embodiment thereof, in which:
- figure 1 is a schematic perspective view of a preferred embodiment of the machine according to the present invention;
- figure 2 is a plan view of the machine in figure 1; and
- figure 3 is a schematic side view, with sections of parts and parts removed for the sake of clarity, of a second detail of the machine in figures 1 and 2.

### BEST MODE FOR CARRYING OUT THE INVENTION

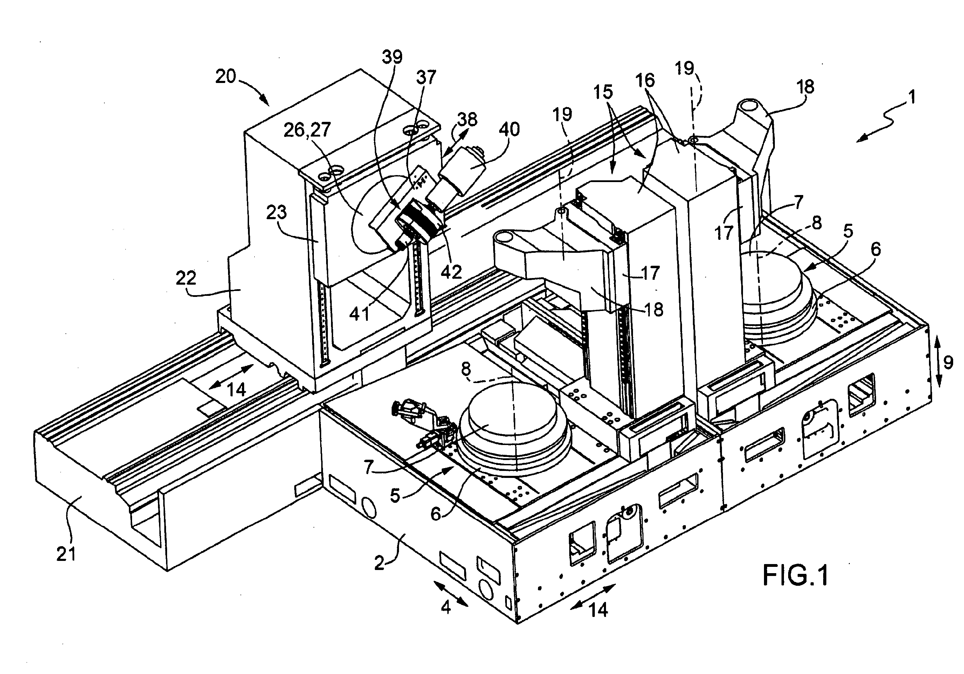

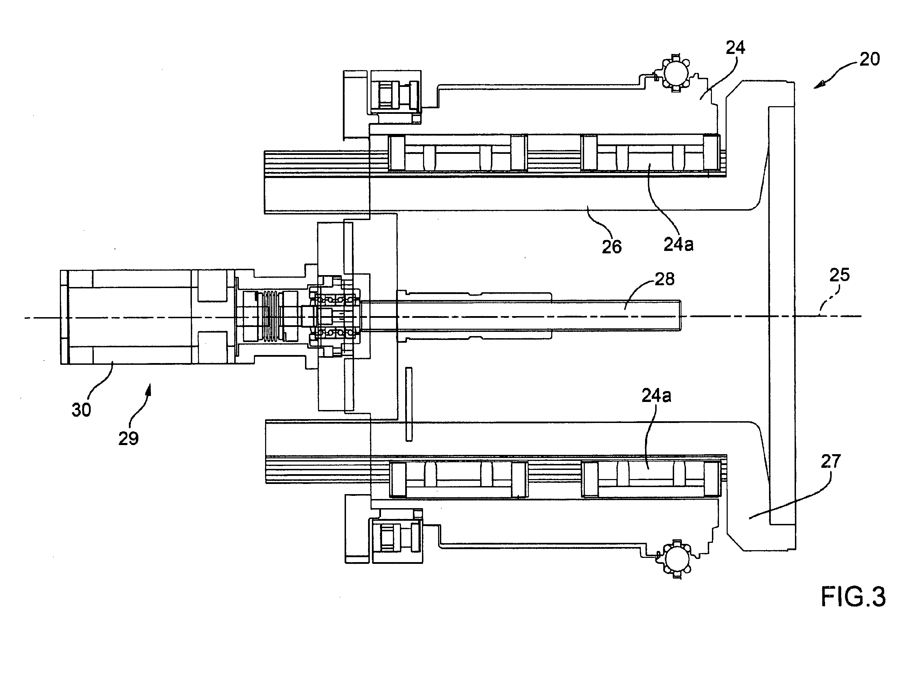

With reference to figures 1 and 3, designated as a whole by number 1 is a machine for making gears (which are not illustrated) comprising a support frame 2, which is substantially rectangular in shape, and supports two guiding devices 3 that are parallel to each other and to a substantially horizontal direction 4.

Each device 3 is slidingly engaged by a relative piece-holder unit 5 comprising a slide 6, which is slidingly coupled to the device 3 so as to move, with respect to the frame 2 and driven by a known actuating device that is not illustrated, in a straight line in the direction 4, and supports a piece-holder table 7, which is suitable to support a substantially cylindrical piece (not illustrated). The piece-holder table 7 is mounted on the slide 6 so as to rotate, with respect to the slide 6 and driven by a known actuating device that is not illustrated, about its own longitudinal axis 8 parallel to a substantially vertical direction 9 and transversal to the direction 4.

With reference to figure 1, each unit 5 cooperates with an operating unit 15 comprising a vertical column 16 which extends upwards from the frame 2 in the direction 9, is arranged between the two units 5 facing the column 16 of the other unit 15 and supports a slide 17 slidingly coupled to the column 16 so as to move in a straight line in the direction 9 along the column 16 and driven by a known actuating device that is not illustrated.

The unit 15 also comprises a support arm 18, which is hinged to the slide 17 to rotate, with respect to the slide 17 and driven by a known actuating device that is not illustrated, about a fulcrum axis 19 parallel to the direction 9, and supports an auxiliary device (not illustrated) for machining and/or controlling the piece (not illustrated) mounted on the relative piece-holder table 7.

The machine 1 is also provided with an additional operating unit 20 comprising an elongated base 21, which extends in the direction 14, is arranged alongside the frame 2, and one end of which protrudes from said frame 2; a horizontal slide 22 which extends upwards from the base 21 in the direction 9, and is slidingly coupled to the base 21 so as to move in a straight line along the base 21 in the direction 14, driven by a known actuating device that is not illustrated; and a vertical slide 23 slidingly coupled to the slide 22 so as to move in a straight line along the slide 22 in the direction 9, driven by a known actuating device that is not illustrated.

According to that illustrated in figure 3, the slide 23 is rotatingly engaged by a tube 24, which has a longitudinal axis 25 parallel to the direction 4, extends through the slide 23, and is mounted to rotate with respect to the slide 23 about said axis 25 and driven by a known actuating device that is not illustrated.

The tube 24 supports a tubular slide 26, which extends inside the tube 24, coaxially with respect to the axis 25, is axially limited by an annular flange 27 that extends outside and facing the tube 24, is slidingly coupled to a pair of guideways 24a mounted on the inner surface of the tube 24 parallel to the direction 4, and is also coupled, by means of a lead screw system, to a screw 28 of an actuating device 29, one motor 30 of which fixed to the tube 24 makes the screw 28 rotate to make the slide 26 move in a straight line along said tube 24 in the direction 4.

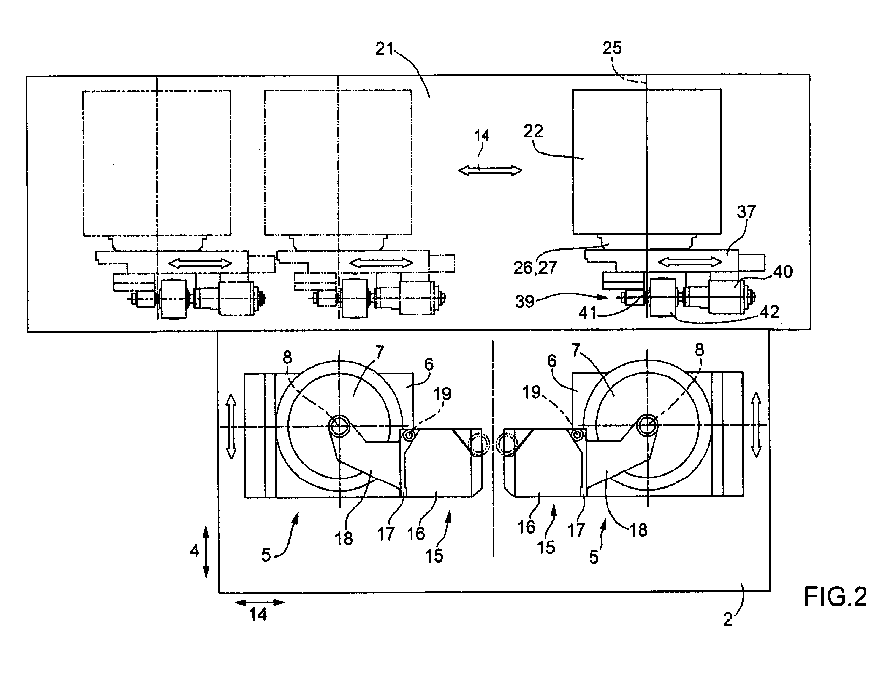

With reference to figure 2, the unit 20 also comprises a slide 37 slidingly coupled to the flange 27, so as to move, in relation to the slide 26 and driven by a known actuating device that is not illustrated, in a straight line in a direction 38, the orientation of which depends on the angular position of the tube 24 about the axis 25.

Lastly, the slide 37 supports an operating head 39 comprising an electric motor 40, which extends in the direction 38, and is provided with an output shaft 41 to which at least one tool 42 is keyed for machining said pieces (not illustrated).

In actual use, the operating head 39 is moved along the base 21 in the direction 14 between two machining stations, inside each of which the head 39 faces a piece-holder unit 5 to machine the piece (not illustrated) mounted on the relative piece-holder table 7, and a tool changing station, in which the head 39 fits into the portion of the base 21 that protrudes from the frame 2 in the direction 14 to replace the tool 42.

The machine 1 is able of performing two types of machining processes on each piece (not illustrated):
- gear cutting, to produce the teeth of the gears (not illustrated), which normally comprises a first rough machining stage and a second finishing phase; and
- a grinding process to grind the teeth made during the previous gear cutting process and which normally also comprises a first rough machining stage and a second finishing phase.

In this respect it should be noted that:
the slide 26 (figure 3) and each of the slides 6 are connected to an electronic control unit (not illustrated) suitable to selectively move the slides 6 and stop the slide 26 while the gear cutting process is performed on the relative piece (not illustrated), and also suitable to move the slide 26 and stop the slides 6 while the grinding process is performed on said piece.

In other words, gear cutting is performed by moving only the piece-holder table 7 in the direction 4 and stopping the operating head 39 in said direction 4, while the grinding process is performed by moving only the operating head 39 in the direction 4 and stopping the piece-holder table 7 in said direction 4.

Selectively using the slide 26 and the slides 6 prevents the high levels of stress transmitted to the operating head 39 during gear machining from undermining the proper orientation and correct shape of the guideways 24a of the tube 24 and thus allows the machine 1 to perform both the gear cutting process and the grinding process properly on each piece (not illustrated) using a single operating head 39.

According to alternative embodiments that are not illustrated, the operating head 39 and/or the slides 6 may clearly be mounted on a combination of slides and rotating support units other than those described above.

## Claims

1. A machine (1) for making gears, the machine comprising at least one piece-holder table (7), which is mounted to rotate about a given first longitudinal axis (8) thereof, and supports a piece being machined; and at least an operating head (39), which is provided with at least one tool (42) for machining the piece, and is movable in a first direction (4) substantially transversal to said first axis (8); the piece-holder table (7) and the operating head (39) are provided with relative motion with respect to each other in said first direction (4), **characterized in that** the operating head (39) and the piece-holder table (7) being configured to selectively stop along their respective path according to the machining process to be carried out on the piece.

2. Machine (1) as claimed in Claim 1, **characterized in that** the operating head (39) in use is stopped for cutting teeth in the piece, while the piece-holder table (7) is stopped for grinding the piece.

3. Machine according to any one of the preceding Claims and further comprising an operating unit (20) comprising, in turn, an elongated base (21) extending in a second direction (14) substantially transversal to the first direction (4), a first slide (22) mounted on the base (21) to move in the second direction (14), a second slide (23) mounted on the first slide (22) to move in a third direction (9) substantially orthogonal to said first and second directions (4, 14), a first guiding device (24) pivotally mounted on the second slide (23) to rotate about a third longitudinal axis (25) thereof, parallel to said first direction (4), and a third slide (26) mounted on the first guiding device (24) to move in said first direction (4); the operating head (39) being carried by said third slide (26).

## Patentansprüche

1. Maschine (1) zum Herstellen von Zahnrädern, wobei die Maschine Folgendes umfasst: mindestens einen Werkstückhaltertisch (7), der so montiert ist, dass er sich um eine gegebene erste Längsachse (8) herum drehen kann, und ein zu bearbeitendes Werkstück stützt; und mindestens einen Arbeitskopf (39), der mit mindestens einem Werkzeug (42) zum Bearbeiten des Werkstücks bestückt ist und sich in einer ersten Richtung (4) bewegen kann, die im Wesentlichen quer zu der ersten Achse (8) verläuft; wobei sich der Werkstückhaltertisch (7) und der Arbeitskopf (39) relativ zueinander in der ersten Richtung (4) bewegen können, **dadurch gekennzeichnet, dass** der Arbeitskopf (39) und der Werkstückhaltertisch (7) dafür eingerichtet sind, entsprechend dem an dem Werkstück auszuführenden Bearbeitungsprozess entlang ihres jeweiligen Bewegungspfades selektiv anzuhalten.

2. Maschine (1) nach Anspruch 1, **dadurch gekennzeichnet, dass** der Arbeitskopf (39) während des Gebrauchs angehalten wird, um Zähne in das Werkstück zu schneiden, während der Werkstückhaltertisch (7) angehalten wird, um das Werkstück zu schleifen.

3. Maschine nach einem der vorangehenden Ansprüche, die des Weiteren Folgendes umfasst: eine Arbeitseinheit (20), die ihrerseits eine längliche Basis (21) umfasst, die sich in einer zweiten Richtung (14) im Wesentlichen quer zu der ersten Richtung (4) erstreckt, einen ersten Schlitten (22), der auf der Basis (21) montiert ist, um sich in der zweiten Richtung (14) zu bewegen, einen zweiten Schlitten (23), der auf dem ersten Schlitten (22) montiert ist, um sich in einer dritten Richtung (9) zu bewegen, die im Wesentlichen orthogonal zu der ersten und der zweiten Richtung (4, 14) verläuft, eine erste Führungsvorrichtung (24), die schwenkbar auf dem zweiten Schlitten (23) montiert ist, um sich um eine dritte Längsachse (25) zu drehen, die parallel zu der ersten Richtung (4) verläuft, und einen dritten Schlitten (26), der auf der ersten Führungsvorrichtung (24) montiert ist, um sich in der ersten Richtung (4) zu bewegen; wobei der Arbeitskopf (39) durch den dritten Schlitten (26) getragen wird.

## Revendications

1. Machine (1) pour fabriquer des engrenages, la machine comprenant au moins une table de support de pièce (7), qui est montée pour tourner autour d'un premier axe longitudinal donné (8) de celle-ci, et qui supporte une pièce en cours d'usinage ; et au moins une tête de fonctionnement (39), qui est pourvue d'au moins un outil (42) pour usiner la pièce, et qui peut être déplacée dans une première direction (4) sensiblement transversale au dit premier axe (8) ; la table de support de pièce (7) et la tête de fonctionnement (39) se déplacent de manière relative l'une par rapport à l'autre dans ladite première direction (4), **caractérisée en ce que** la tête de fonctionnement (39) et la table de support de pièce (7) sont configurées pour s'arrêter sélectivement sur leur voie respective en fonction du processus d'usinage à effectuer sur la pièce.

2. Machine (1) selon la revendication 1, **caractérisée en ce que** la tête de fonctionnement (39) en utilisation est arrêtée pour découper des dents dans la pièce, alors que la tête de support de pièce (7) est arrêtée pour meuler la pièce.

3. Machine selon l'une quelconque des revendications précédentes, comprenant en outre une unité de fonctionnement (20) comprenant elle-même une base allongée (21) s'étendant dans une deuxième direction (14) sensiblement transversale à la première direction (4), une première glissière (22) montée sur la base (21) pour se déplacer dans la deuxième direction (14), une deuxième glissière (23) montée sur la première glissière (22) pour se déplacer dans une troisième direction (9) sensiblement orthogonale auxdites première et deuxième directions (4, 14), un premier dispositif de guidage (24) monté de manière à pouvoir pivoter sur la deuxième glissière (23) pour tourner autour d'un troisième axe longitudinal (25) de celle-ci, parallèle à ladite première direction (4), et une troisième glissière (26) montée sur le premier dispositif de guidage (24) pour se déplacer dans ladite première direction (4) ; la tête de fonctionnement (39) étant portée par ladite troisième glissière (26).
